(19) Europäisches Patentamt
European Patent Office
Office européen des brevets

(11) **EP 3 676 750 B1**

(12) **EUROPEAN PATENT SPECIFICATION**

(45) Date of publication and mention
of the grant of the patent:
**05.06.2024 Bulletin 2024/23**

(21) Application number: **18766162.4**

(22) Date of filing: **31.08.2018**

(51) International Patent Classification (IPC):
*G06T 7/00* *(2017.01)*      *G06T 7/143* *(2017.01)*
*G06T 7/174* *(2017.01)*

(52) Cooperative Patent Classification (CPC):
**G06T 7/0012; G01N 15/1468; G06F 18/24155;
G06T 7/20; G06T 7/277; G06T 7/70; G06T 7/77;
G06V 10/454; G06V 10/82; G06V 20/695;**
G01N 21/6408; G01N 21/6458; G01N 2015/1006;
G01N 2015/1454; G01N 2201/1296;      (Cont.)

(86) International application number:
**PCT/EP2018/073479**

(87) International publication number:
**WO 2019/043162 (07.03.2019 Gazette 2019/10)**

(54) **DETECTION OF BIOLOGICAL CELLS AND TRACING OF CELL LINEAGE**

NACHWEIS BIOLOGISCHER ZELLEN UND NACHWEIS VON ZELLLINIEN

DÉTECTION DE CELLULES BIOLOGIQUES ET TRAÇAGE DE LIGNÉE CELLULAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.09.2017 DE 102017008249**

(43) Date of publication of application:
**08.07.2020 Bulletin 2020/28**

(73) Proprietor: **PHIO scientific GmbH
81371 München (DE)**

(72) Inventors:
• **REMPFLER, Markus**
**68100 Mulhouse (FR)**
• **MENZE, Bjoern H.**
**79100 Freiburg (DE)**
• **STIERLE, Valentin**
**80797 Munich (DE)**
• **PAULITSCHKE, Philipp**
**81371 Munich (DE)**

(74) Representative: **Samson & Partner Patentanwälte
mbB
Widenmayerstraße 6
80538 München (DE)**

(56) References cited:
WO-A1-2015/177268      WO-A1-2017/100903
WO-A2-2011/126442      US-A1- 2017 138 849
US-A1- 2018 232 879

• **CHANG YUAN-HSIANG ET AL: "Human induced
pluripotent stem cell region recognition in
microscopy images using Convolutional Neural
Networks", 2017 39TH ANNUAL INTERNATIONAL
CONFERENCE OF THE IEEE ENGINEERING IN
MEDICINE AND BIOLOGY SOCIETY (EMBC),
IEEE, 11 July 2017 (2017-07-11), pages 4058-4061,
XP033152918, DOI: 10.1109/EMBC.2017.8037747
[retrieved on 2017-09-13]**
• **KAINZ PHILIPP ET AL: "You Should Use
Regression to Detect Cells", 18 November 2015
(2015-11-18), MEDICAL IMAGE COMPUTING AND
COMPUTER-ASSISTED INTERVENTION - MICCAI
2015 : 18TH INTERNATIONAL CONFERENCE,
MUNICH, GERMANY, OCTOBER 5-9, 2015;
PROCEEDINGS; [LECTURE NOTES IN
COMPUTER SCIENCE; LECT.NOTES
COMPUTER], SPRINGER INTERNATIONAL
PUBLISHING, CH, XP047337308, ISSN: 0302-9743
ISBN: 978-3-319-24946-9 [retrieved on
2015-11-18] cited in the application the whole
document**

EP 3 676 750 B1

- ALLIER C P ET AL: "Lensfree video microscopy: high throughput monitoring and cell tracking of 2D cell cultures", PROGRESS IN BIOMEDICAL OPTICS AND IMAGING, SPIE - INTERNATIONAL SOCIETY FOR OPTICAL ENGINEERING, BELLINGHAM, WA, US, vol. 9536, 16 July 2015 (2015-07-16), pages 95360J-95360J, XP060056531, ISSN: 1605-7422, DOI: 10.1117/12.2183468 ISBN: 978-1-5106-0027-0
- MARKUS REMPFLER ET AL: "Tracing cell lineages in videos of lens-free microscopy", MEDICAL IMAGE ANALYSIS, vol. 48, 5 June 2018 (2018-06-05), pages 147-161, XP055516834, GB ISSN: 1361-8415, DOI: 10.1016/j.media.2018.05.009
- REMPFLER MARKUS ET AL: "Cell Lineage Tracing in Lens-Free Microscopy Videos", 4 September 2017 (2017-09-04), MEDICAL IMAGE COMPUTING AND COMPUTER-ASSISTED INTERVENTION - MICCAI 2017 : 20TH INTERNATIONAL CONFERENCE, QUEBEC CITY, CA, SEPT. 11-13, 2017; PROCEEDINGS; [LECTURE NOTES IN COMPUTER SCIENCE; LECT.NOTES COMPUTER], SPRINGER INTERNATIONAL PUBLISHING, CH, XP047454704, ISSN: 0302-9743 ISBN: 978-3-319-24946-9 [retrieved on 2017-09-04] the whole document

- Flaccavento G ET AL: "Learning to Count Cells: Applications to Lens-free Imaging of Large Fields", Microscopic Image Analysis with Applications in Biology, 1 January 2011 (2011-01-01), XP055824876, Retrieved from the Internet: URL:https://www.robots.ox.ac.uk/~vgg/publi cations/2011/Flaccavento11/flaccavento11.p df [retrieved on 2021-07-15]

(52) Cooperative Patent Classification (CPC): (Cont.)
G02B 21/367; G06T 2207/10016;
G06T 2207/10056; G06T 2207/20072;
G06T 2207/20076; G06T 2207/20081;
G06T 2207/20084; G06T 2207/30024;
G06T 2207/30242

## Description

### Technical field

The present invention relates to the detection and tracing of biological cells and cell lineage in microscopy images and videos, in particular to methods, systems and computer program products.

### Background of the invention

In vitro experiments with cell cultures are essential for studying growth and migration behaviour and thus, for instance, for gaining a better understanding of cancer progression and its treatment.

Cell growth and migration play key roles in cancer progression: abnormal cell growth can lead to formation of tumors and cancer cells can spread to other parts of the body, a process known as metastasis. In vitro experiments are essential to understand these mechanisms and for developing anti-cancer drugs. In these experiments, the cells are typically observed with conventional light microscopes. Thanks to recent advances in CMOS sensor technology, lens-free microscopy (LFM) [13,4] has become a promising alternative. In LFM a part of the incident wavefront originating from the light source is scattered by the sample, in this case the cell. The scattered light then interferes with the unscattered part of the wavefront and the resulting interference pattern is recorded with a CMOS sensor. The components required for LFM are extremely small and cheap. Thus, LFM provides the means for a wide range of applications where a conventional light microscope would be either too big or simply too expensive, such as the continuous monitoring of growing cell cultures inside standard incubators [9]. Since recent progress in lens-free microscopy (LFM) has rendered it an inexpensive tool for continuous monitoring of these experiments, there is a need for analysing such time-lapse sequences.

There are several works on these tasks in traditional light microscopy, e.g. focussing on cell segmentation [15], detection and counting [8,10,16] or tracking [1,6,7,12,14], but very few deal with LFM data. One of the few exceptions is [3] which employs a regression framework for estimating the total cell count per image. However, there is a need for not only counting but also localizing cells and reconstructing their spatio-temporal lineage forest.

Methods for the latter task range from Kalman filtering [1] to keep track of moving cells, or iteratively composing tracklets by using the Viterbi algorithm [11], and have been compared in [12]. More recently, Jug et al. [7] have proposed a mathematically rigorous framework for lineage reconstruction, the so-called moral lineage tracing problem (MLTP). The MLTP differs fundamentally from all mathematical abstractions of cell tracking whose feasible solutions are either disjoint paths or disjoint trees of detections. Unlike these approaches that select only one detection for each cell in every image, feasible solutions of the MLTP select and cluster an arbitrary set of such detections for each cell. This renders the lineage trees defined by feasible solutions of the MLTP robust to the addition of redundant detections, a property the inventors will exploit in this work.

It is an object to provide for reliable and automatic image analysis to quantify the clinically relevant information on cell growth and migration from the large amount of images that are acquired in such continuous monitoring. Counting the number of cells in a time series of images gives access to the dynamics of cell growth. Locating and tracing individual cells provides information about cell motility, and over the course of a sequence, reconstructing the lineage trees gives insights into cell cycle timings and allows more selective analysis of cell sub-cultures.

### Summary of the invention

In a first aspect, the present invention relates to a computer-implemented method for detecting biological cells according to claim 1. In particular, the method comprises obtaining multiple lens-free microscopy images depicting the biological cells.

Further, the method comprises generating a probability map for one of the microscopy images, the probability map indicating probabilities for the presence of the biological cells at multiple regions, in particular pixels, of the one microscopy image.

Additionally, the method comprises determining, based on multiple generated probability maps, one for each of the multiple microscopy images, a cell lineage forest indicating the localisation of at least some of the biological cells over the sequence of the multiple microscopy images.

The generating is performed by means of regression of a convolutional neural network, trained using annotated training data. Annotated training data is obtained from fluorescence images and/or videos of biological cells. In particular, acquisition of fluorescence images and/or videos of biological cells allow for automated, reproducible and highly parallel annotations. For the acquisition of fluorescence images, the cells or cell nuclei may be fluorescently labelled.

In some embodiments, the determining is performed by global optimization. In particular, such optimization may be carried out on a hypothesis graph using a probabilistic model. More particularly, the hypothesis graph may be constructed based on the generated probability maps.

In a further aspect, the present invention relates to a computer program product according to claim 7, including program code configured, when executed in a computing device, to carry out the steps of one of the methods according to the invention.

In a still further aspect, the present invention relates to a system to detect biological cells and/or trace a cell lineage forest of biological cells according to claim 8. The system comprises a microscopy sensor, in particular a CMOS sensor for lens-free microscopy, and a processing part, the processing part configured to carry out the steps of one of the methods according to the invention.

In particular, the present disclosure relates to (1) a cell detector for LFM images based on residual learning, and (2) a probabilistic model based on moral lineage tracing that explicitly handles multiple detections and temporal successor hypotheses by clustering and tracking simultaneously.

Cells are detected in a sequence of lens-free microscopy (LFM) images and their movement and descent patterns may be reconstructed as a graph. This graph may be referred to as a *cell lineage forest.*

The method comprises the following two steps:

1. Cell detection: Based on a single LFM image, a probability map is generated, which indicates the localisation of cells.
2. Lineage tracing: Given a sequence of probability maps, the most probable cell lineage forest is reconstructed.

Cell detection is formulated as a regression, wherein the probability of finding a cell center of mass at a particular pixel is estimated. A convolutional neural network (CNN) is used as regressor, which is trained by standard methods. The implementation may use tensorflow software, available from www.tensorflow.org. The architecture of the CNN may be based on [5] and a potential architecture is described in detail further below with respect to Example 2, as well as the construction of the probability maps from annotations during training of the CNN.

### Short description of the drawings

The present invention will be described in detail with reference to the following drawings, wherein:

**Fig. 1** shows a flow diagram of a method according to an embodiment;

**Fig. 2** shows the cell lineage tracing problem with LFM data;

**Fig. 3** shows an illustration of the workflow;

**Fig. 4** shows a graph of experimental results of the performance of different detectors;

**Fig. 5** shows graphs with the results of a sensitivity analysis of the lineage tracing model with different detectors;

**Fig. 6** shows graphs indicative of cell dynamics measured on two experiments with skin cancer cell lines;

**Fig. 7** shows exemplary microscopy images for different cell lines at various densities;

**Fig. 8** shows graphs indicative of the performance of detectors on different datasets;

**Fig. 9** illustrates a comparison on a sequence with a dense cell culture; and

**Fig. 10** shows graphs indicative of lineage tracing metrics on the fluorescence-annotated dataset.

### Detailed description of the drawings

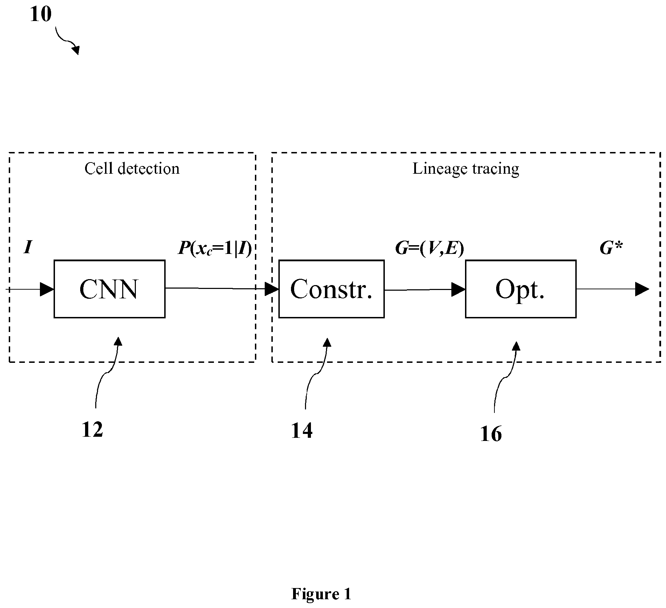

**Fig. 1** shows a flow diagram of a method according to an embodiment. The method 10 comprises cell detection and lineage tracing.

For cell detection, single LFM images $I$ are processed by a convolutional neural network (step 12), which estimates a probability map $P(c_s = 1|I)$. This map indicates for each location (i.e. each pixel) $s$ in $I$ the probability of a cell being localized at this position.

In a second step, the lineage tracing, the probability maps of multiple consecutive images are processed further. First, potential cells are detected and added to the hypothesis graph as nodes (step 14) and then complemented by edges. By means of a probabilistic model, a cost function is computed, according to which the subgraph G* is searched (step 16), which best describes the cell lineage forest. An example of such a probabilistic model is given further below with reference to Example 1.

The cell lineage tracing is formulated as global optimization, which may be in line with the one described in [7]. First, a *hypothesis graph G = (V,E)* is constructed from the sequence of probability maps (output of the cell detection) using non-maxima suppression and an edge hypothesis.

According to the non-maxima suppression, for each local maximum in the probability map, which fulfils $P\,(c_s= 1|I) \geq \theta$ and is not located within a radius $r_{max}$ of another maximum, a node v is added in the hypothesis graph G. This is computed using a maximum filter with radial footprint of $r_{max}$. For each node, its temporal (i.e. which frame) und spatial coordinates are stored.

According to the edge hypothesis, an edge $e \in E$ is added for two nodes $v,w \in V_t$ of the same frame $t$, if their Euclidian distance is smaller than or equal to a threshold, $d(v,w) \leq d_{max}^{sp}$ .

This is repeated for $v \in V_t$ and $w \in V_{t+1}$, two nodes in consecutive images. An edge is added for them, if their Euclidian distance is smaller than or equal to a threshold, $d(v,w) \leq d_{max}^{temp}$ .

The construction is essentially in line with [7], preferably with the following differences: 1) the nodes are localisations and no cell fragments. 2) the resulting graph is not guaranteed to be planar. Thus, edges may exist between two nodes, which run through a third node. 3) If there is a short gap of less than $\Delta t$ between multiple consecutive nodes, then nodes are added artificially.

Finally, a weight is associated to each edge, such that the determination of the most probable cell lineage forest is a combinatorial optimization. An exemplary weighting as well as the optimization problem can be found further below with reference to Example 1.For the optimization, the heuristics of [14] are used. The result of this optimization is thus a labelling of the edges $E$, indicating which ones of the edges are present or not in the final lineage forest.

If edges between nodes are active within the same frame, then these two nodes are contracted into a single one.

In some embodiments, as described below with reference to the Examples, the method may comprise the training using annotated data.

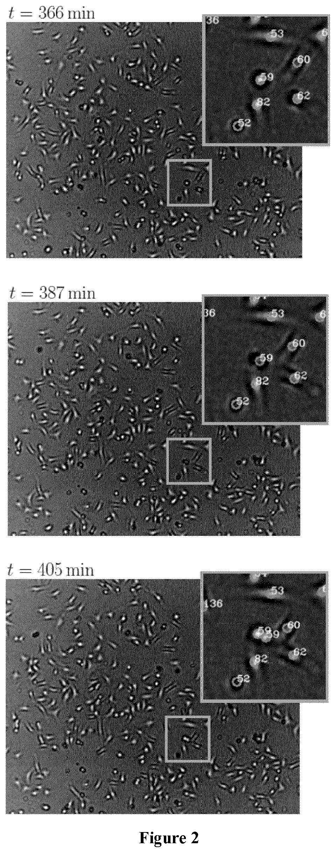

**Fig. 2** shows the cell lineage tracing problem with LFM data. The inventors aim to detect all cells and establish their relation over time, i.e. determine the lineage forest. While the LFM technology allows for frequent image acquisition (3min / frame in this case), challenges arise due to overlapping interference patterns of close objects, fluctuating shape and size of the cells appearance, and particles that generate similar patterns as the cells. The detail views show cell locations as a circle and identify their lineage tree

The present disclosure relates to a framework for analysis of LFM sequences. First, the inventors design and benchmark robust cell detectors for LFM time-lapse sequences derived from most recent work on convolutional neural networks and residual learning. Second, the inventors discuss the MLTP in the context of LFM data. In particular, the inventors define a probability measure for which the MLTP is a maximum a posteriori (MAP) estimator. This allows to define the costs in the objective function of the MLTP with respect to probabilities that the inventors estimate from image data. The inventors validate it experimentally on two annotated sequences. Finally, the inventors demonstrate the capability of the approach to quantify biologically relevant parameters from sequences of two in vitro experiments with skin cancer cells.

## Examples

The present invention is described in detail by the following non-limiting examples.

The inventors consider the lineage tracing task as a MAP inference over a hypothesis graph containing a multitude of potential lineage forests. The inventors discuss the probability measure and its MAP estimator, the MLTP in Example 1. In order to construct the hypothesis graph from a sequence of LFM images, the inventors devise a cell detector in Example 2, which estimates a cell probability map for each given image.

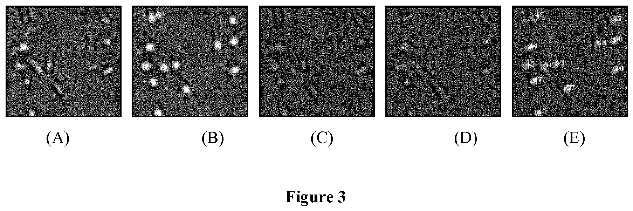

The workflow is illustrated in **Fig. 3**, namely in (A) raw microscopy image, (B) image overlayed with cell probability map generated by the detector, (C) nodes of the hypothesis graph with spatial edges constructed from cell probabilities, (D) optimized lineage where spatial edges that were cut are removed, and (E) each cluster is represented as one cell with its lineage tree identifier. Temporal edges are not depicted for simplicity.

It may be noted that the examples 2 and 1 may be carried out individually, or consecutively in order to perform both the cell detection and the lineage tracing.

## Example 1 - Lineage tracing

**Hypothesis graph.** The inventors construct a spatio-temporal hypothesis graph $G = (V,E)$ as follows: For every

image $I_t$ in the sequence, the inventors apply a cell detector and define one node $v \in V_t$ for every local maximum in $P$ ($c_s$= 1|$I_t$), the estimated probability map for finding a cell at a particular location $s$ in image $I_t$. Additionally, the inventors define *hypothesized* successors to each node that has one or more favourable parents in the previous frame but no immediate successor. This helps avoiding gaps in the final tracklets. The nodes $v \in V$ represent cells, yet do not need to be unique, i.e. one cell may give rise to several nodes. In fact, lateral constructive interference of the captured pattern of cells in LFM often causes multiple maxima from one cell and thus, spurious nodes. To avoid gaps in otherwise consistent tracklets, the inventors define hypothesized successors to each node that has one or more favourable, potential parents over the k previous frames but no immediate, favourable successor. Here, favourable is understood as the nodes being at most $d_{gap}$ away from each other. By default, the inventors use k = 3 and $d_{gap}$ = 10 and fill gaps of up to 3 time steps. Having constructed all the nodes, the inventors then construct edges in space $E_t^{sp}$= {$uv \in V_t \times V_t$: $d(u,v) \leq d_{max}$}, i.e. between any two nodes that lie within a distance of $d_{max}$, and in the same fashion, the inventors construct temporal edges $E_t^{tmp}$= {$uv \in V_t \times V_{t+1} : d(u,v) \leq d_{max}$} between nodes in adjacent frames. Temporal edges simply represent the possibility that two nodes describe the same cell in two different frames, while spatial edges represent the possibility that two nodes originate from a single individual cell. This hypothesis graph is not planar within each frame, implicitly preventing clusters from expanding arbitrarily far in the spatial domain.

**Probabilistic model.** The inventors introduce a family of probability measures, each defining a conditional probability of any lineage forest, given an image sequence. The inventors describe the learning of this probability from a training set of annotated image sequences as well as the inference of a maximally probable lineage forest, given a previously unseen image sequence. The resulting MAP estimation problem will assume the form of an MLTP with probabilistically justified costs.

First, the inventors encode subgraphs in terms of cut edges with binary indicator variables $\mathbf{x} \in \{0,1\}^E$. If edge $uv$ is cut, i.e. $x_{uv}$= 1, it means that nodes $u$ and $v$ do *not* belong together. In order to ensure that the solution describes a lineage forest, the inventors rely on the formulation of the MLTP [7], which describes the set of inequalities that are required to do so. In short, these constraints ensure: 1) *spatial* and *temporal consistency,* i.e. if nodes $u$ and $v$ as well as $v$ and $w$ belong together, then $u$ and $w$ must also belong together. 2) Distinct tracklets cannot merge at a later point in time. These are the so called *morality* constraints. 3) *Bifurcation* constraints allow cells to split in no more than two distinct successors. The inventors will denote the set of $\mathbf{x}$ that describe valid lineage forests with $X_G$. A more extensive discussion of these constraints has been given in [7,14]. The inventors next model the measure of probability:

$$P\left(\mathbf{x}|X_G, \mathbf{\Theta}\right) \propto P\left(X_G|\mathbf{x}\right) \prod_{uv \in E} P\left(x_{uv}|\mathbf{\Theta}\right) \prod_{v \in V} P\left(x_v^+|\mathbf{\Theta}\right) \prod_{v \in V} P\left(x_v^-|\mathbf{\Theta}\right), \quad (1)$$

(where

$$P\left(X_G|\mathbf{x}\right) \propto \quad 1 \qquad \text{if } \mathbf{x} \in X_G . \qquad\qquad (2)$$

$$P\left(X_G|\mathbf{x}\right) \propto \quad 0 \qquad \text{otherwise}$$

It is comprised of four parts. First, we have $P\left(X_G|\mathbf{x}\right)$ representing the uniform prior over $X_G$. Second, the cut probability $P\left(x_{uv}|\mathbf{\Theta}\right)$ describing the probability of $u$ and v being part of the same cell (either in space or along time), and third and fourth, the birth and termination probabilities $P\left(x_v^+|\mathbf{\Theta}\right)$ and $P\left(x_v^-|\mathbf{\Theta}\right)$ for each node $v \in V$. The variables $x_v^+, x_v^-$ $\in \{0,1\}$ are indicating whether the respective event, birth or termination, occurs at node $v$. $\mathbf{\Theta}$ denotes the joint set of parameters. The inventors use these parts to incorporate the following assumptions: Two detections $u$ and $v$ that are close are more likely to originate from the same cell, hence the inventors choose

$$P\left(x_{uv} = 1|\mathbf{\Theta}\right) = \min\left(\frac{d(u,v)}{\theta^{\mathrm{sp}}}, 1\right)$$

Similarly, two successive detections $u$ at $t$ and v at $t$+1 are more likely to be related the closer they are, is captured by

$$P\left(x_{uv} = 1|\mathbf{\Theta}\right) = \min\left(\frac{d(u,v)}{\theta^{\mathrm{tmp}}}, 1\right)$$

Finally, the inventors assume that birth and termination events occur at a low rate, which is incorporated by

$$P\left(x_v^+ = 1|\Theta\right) = \theta^+ \text{ and } P\left(x_v^- = 1|\Theta\right) = \theta^-$$

The inventors fit these parameters $\Theta$ on training data in a maximum likelihood fashion: For $\theta$ and $\theta^+$ this boils down to calculating the relative frequency of the respective events on the annotated lineage. For the spatial and temporal parameters $\theta^{sp}$ and $\theta^{mp}$, the inventors first complement the lineage forest with edges within $d_{max}$ as $E$. The inventors then maximize the log-likelihood $l(\theta) = \Sigma_{uv \in E} \log l(x_{uv}|\theta)$ by an extensive search over the interval $\theta \in [\theta_{min}, \theta_{max}]$, where the inventors found [1,80] to be appropriate.

The MAP estimate $\mathbf{x}^* = \arg\max_{x \in X} P(\mathbf{x}|\Theta, X_G)$ can be written as solution to the MLTP:

$$\min\left\{ \sum_{uv \subseteq E} c_{uv}x_{uv} + \sum_{v \subset V} c_v^+ x_v^+ + \sum_{v \subset V} c_v^- x_v^- \ \bigg| \ \mathbf{x} \in X_G \cap X_V \right\}, \qquad (3)$$

where the coefficients become $c_{uv} = -\log \frac{P(x_{uv}=1|\Theta)}{1-P(x_{uv}=1|\Theta)}$ for edges, and vice versa for $c_v$ of the node events. $X_V$ is the set of $\mathbf{x}$ that satisfy the auxiliary constraints which tie birth and termination indicator variables $x_v^-$ and $x_v^+$ to the respective edge variables. The inventors optimize (3) with the KLB algorithm described in [14].

### Example 2 - Cell Detection with Residual Networks

Cells in LFM images are usually only marked at their center of mass and not segmented since their interference pattern, i.e. their appearance in the image, does not accurately describe their true shape and would therefore be ambiguous in many cases. Thus, the inventors are interested in a detector that outputs the set of cell centers in image $I_t$. Strong performance of the detector is crucial for the lineage reconstruction as its errors can affect the final lineage trees over many frames. To achieve this, the inventors build on the recent work on fully convolutional neural networks and residual networks [5]. However, instead of directly regressing bounding boxes or center coordinates in a sliding window fashion, the inventors train the network, denoted with $f(I_t)$, on a surrogate task: the inventors approximate $f(I_t) \approx P(c_s = 1|I_t)$, the probability map of finding a cell at a particular location $s$ in $I_t$. This detector is fully convolutional and its output $f(I_t)$ has the same size as $I_t$. The inventors found this to facilitate the training as it enlarges the spatial support of the sparse cell center annotations and gracefully handles the strongly varying cell density. Similar findings were made with techniques that learn a distance transform to detect cells in histopathology images, e.g. in [8]. The inventors describe next how to arrive at a suitable architecture for this task and how to construct $P(c_s = 1|I_t)$ from point-wise cell annotations.

**Network Architecture.** The inventors start from the architecture of *ResNet-50* [5]. The inventors first truncate the network at layer 24 to obtain a fully convolutional detector. The inventors found that truncating in the middle of the original ResNet-50, i.e. at layer 24, results in best resolution of the output response maps and allows to distinguish close cells. The inventors then add one convolutional layer of $1 \times 1 \times 256$ and one upconvolutional layer (also known as deconvolutional layer) of $8 \times 8 \times 1$ with a stride of 8. The former combines all feature channels, while the latter compensates for previous pooling operations and ensures that the predicted cell probability map has the same resolution as the input image $I_t$. Finally, a sigmoid activation function is used in the last layer to ensure that $f(I_t)$ is within the interval [0,1] at any point.

**Loss Function & Training.** The inventors sample training images of size $224 \times 224$ from all frames of the training corpus. For each training image $I_k$, the inventors construct a corresponding cell probability map $P(c_s = 1|I_k)$ by placing a Gaussian kernel $G^{\sigma}$ with $\sigma = 8$ at each annotated center. This implicitly represents the assumption that all cells have about the same extent, which is reasonable for the microscopy data. Each image is normalized to zero mean and unit variance. During training, the inventors minimize the cross entropy loss between the predicted map $f(I_t)$ and $P(c_s|I_t)$ in order to let the network approximate the constructed cell probability map. The inventors fine tune the network (pre-trained weights from ResNet-50 [5]) with a learning rate of $10^{-3}$ for 100 epochs with batch size of 8. In each epoch, the inventors sample 4000 training images. Since the annotated dataset for training is typically small and shows strong correlation between cells in consecutive frames, the inventors used dropout of 0.5 after the last convolutional layer to avoid overfilling.

EP 3 676 750 B1

**Example 3 - Experimental detection and tracing of cancer cells**

In Example 3, a method according to an embodiment is benchmarked on several hours of LFM time-lapse sequences in terms of detection and tracking scores and demonstrates its effectiveness for quantifying cell population dynamics.

**Datasets.** The inventors use a sequence depicting A549 cells, annotated over 250 frames in a region of interest (ROI) of 1295×971px, for all training purposes. For testing, the inventors annotated two distinct sequences monitoring 3T3 cells of 350 and 300 frames in a ROI of 639×511px (*3T3-I*) and 1051×801px (*3T3-II*), respectively. Images were acquired at an interval of 3min with 1.4$\mu$m × 1.4$\mu$m per pixel.

**Benchmarking detectors.** The inventors compare four different network configurations, including the described ResNet-23, ResNet-11, a variant of it which was truncated at layer 11, the UNet [15] and CNN-4. In UNet, the inventors obtained better results when replacing the stacks in the expansive path with single up-convolution layers which are merged with the corresponding feature maps from contracting path. CNN-4 is a plain vanilla CNN with three $5 \times 5$ convolutional layers followed by max pooling and finally, one up-convolutional layer of $8 \times 8 \times 1$ to compensate for the down-sampling operations. The inventors use the same training procedure (cf. Example 2) for all detectors, but adjust the learning rate for UNet and CNN-4 to $10^{-2}$.

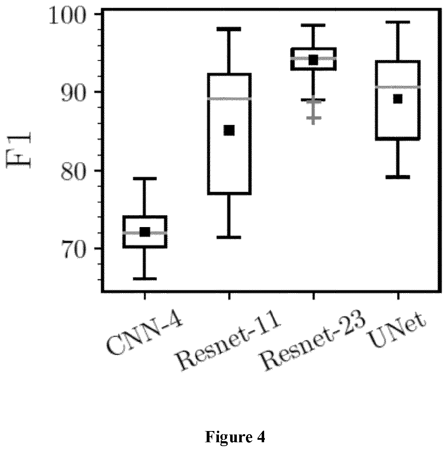

Fig. 4 shows a graph of experimental results of the performance of different detectors over all test frames. Boxplots depict median as orange line, mean as black square and outliers as grey +. The F1 scores are shown in %. The inventors find that ResNet-23 is the most robust detector in the experiment with an average F1 of 94.1%. It is followed by the UNet with 89.2%, ResNet-11 with 85.1% and finally, CNN-4 with only 72.2%.

The inventors match annotated cells to detections within each frame with the hungarian algorithm and consider only matches closer than 10px ($\approx$ a cell center region) as a true positive (TP). Unmatched annotations are counted as false negative (FN), unmatched detections as false positive (FP). The results are presented in Fig. 4, where the inventors find the ResNet-23 to be the most robust detector.

**Lineage tracing.** To compare the quality of different lineages, the inventors match again annotations and detections within each frame to calculate the number of TP, FP and FN as described before. The inventors then determine the number of false links, i.e. how often two matched nodes do not have the same parent. From these, the inventors calculate multiple object detection accuracy (MODA) and multiple object tracking accuracy (MOTA) [2]. Moreover, the inventors derive the number of edit operations needed to get from the predicted lineage to the ground truth lineage, and calculate the tracking accuracy (TRA) score proposed in [12]. The inventors use unit weight for each type of edit (add or delete node or edge). This is justified by the fact that the inventors have point annotations for cells instead of segmentations, making both addition and deletion equally expensive to correct.

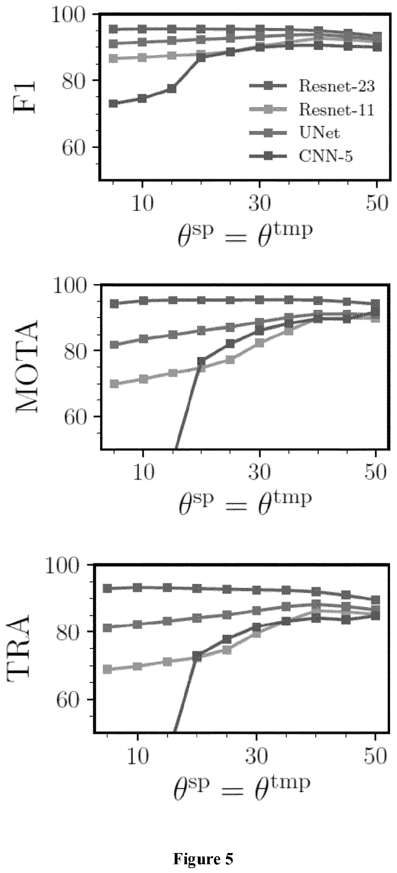

**Fig. 5** shows graphs with the results of a sensitivity analysis of the lineage tracing model with different detectors. The inventors increase both edge cut parameters $\theta^{mp}$ and $\theta^{sp}$ together. While the optimal choice in combination with ResNet-23 is relatively small, i.e. at 10, the other detectors, which suffer from many spurious detections, benefit from a wider range. Most notably, the performance with CNN-4 improves up to a competitive TRA of 84.8%.

For the MLTP, the inventors compare the effect of varying $\theta^{mp}$, $\theta^{sp}$ together with hypothesis graphs generated from the different detectors in Fig. 5. The optimal parameter choice for ResNet-23 is at 10, i.e. a relatively small merge radius of favourable merges, while the other detectors considerably benefit from wider ranges. In Table 1, the inventors compare different lineage tracing approaches. The baseline is linear assignment problem tracking (LAPT) [6]. The disjoint trees method (DTP), uses the ResNet-23 detections but solves the disjoint trees problem instead, i.e. it considers only one detection per cell. The inventors find that MLTP outperforms both in terms of detection and tracking metrics.

**Table 1** shows a quantitative evaluation of traced lineages. Precision, recall, F1 and MODA are averaged over all frames of a sequence, while MOTA and TRA are global scores for the entire lineage forest. All measures are in %. Disjoint trees (DTP) uses the ResNet-23 detections and is equivalent to MLTP with disabled spatial edges and no hypothesized successors. LAPT is linear assignment problem tracking [6] and the baseline.

**Table 1**

| Instance | Method | Precision | Recall | F1 | MODA | MOTA | TRA |
|---|---|---|---|---|---|---|---|
| | LAPT | 86.39 | 88.99 | 87.63 | 85.88 | 83.87 | 80.46 |
| 3T3-I | DTP | 93.67 | 92.84 | 93.22 | 93.67 | 90.21 | 87.22 |
| | MLTP | 96.95 | 93.01 | 94.91 | 97.05 | 95.39 | 92.28 |
| | LAPT | 85.12 | 87.35 | 86.19 | 84.68 | 82.65 | 79.13 |
| 3T3-II | DTP | 94.02 | 95.89 | 94.93 | 93.85 | 91.47 | 89.87 |
| | MLTP | 96.46 | 95.90 | 96.16 | 96.45 | 95.27 | 93.51 |

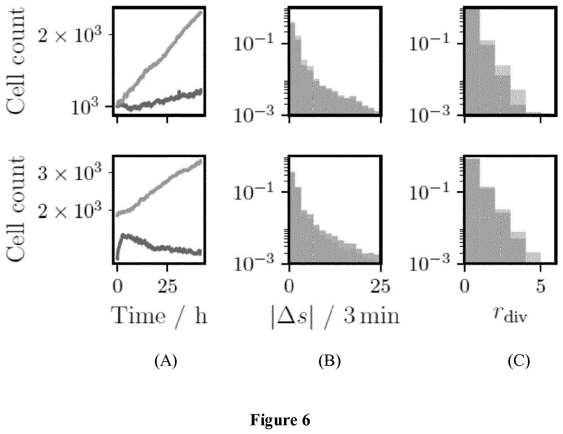

**Assessing cell population dynamics. Fig. 6** shows graphs indicative of cell dynamics measured on two experiments with skin cancer cell lines. One population (blue) is exposed to an inhibitor substance, while the other (orange) is not. **Fig. 6** shows, from left to right: (A) Cell count over time, (B) histograms on cell motility (um/3min) and (C) divisions $r_{div}$/h. Cells that divide often are more abundant in the control group.

The inventors apply the method on data from two experiments with skin cancer cells. In each, one population is exposed to an inhibitor substance while the control is not. **Fig. 6** depicts the resulting statistics. One observes the expected difference in growth rate, yet a more constrained motility of the control cells, which is caused by the limited space.

Thus, the experimental example shows that the presented framework for automatic analysis of LFM time-lapse sequences is able to determine cell lineage forests of high quality and thereby quantify several measures of interest for the analysis of in vitro experiments, including cell population dynamics and motility.

**Examples 4 and 5**

In the following, experiment setup and results are presented for two examples (examples 4 and 5). Example 4 is done on three LFM sequences that were manually annotated based on LFM images only. This is the same dataset that was used in Example 3.

Example 5 is concerned with a more extensive dataset of 16 sequences for which fluorescence microscopy images were acquired in parallel to the LFM images.

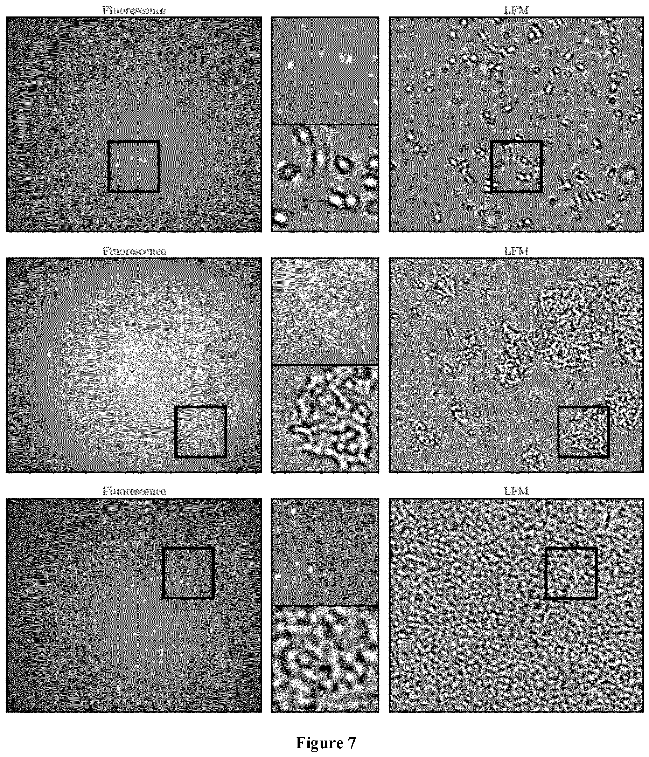

Instances for both types of microscopy images (Examples 4 and 5) can be found in **Fig. 7. Fig.7** shows examples for sequences of different cell culture density (top to bottom: low, medium, high) and different cell lines (again top to bottom: 3T3, A549, HuH7). The left hand side shows the fluorescence microscopy image, while the corresponding LFM image is shown on the right. The central column presents a detailed view of the indicated region for each comparison. The fluorescence microscopy image, in which the cell nuclei are labeled with a fluorescent dye, provides valuable information to generate ground truth annotations for otherwise ambiguous scenarios, such as dense cell clusters. The LFM, on the other hand, is a label-free technique and thus avoids all the limitations inherent to fluorescence labeling, such as temporally limited observation due to bleaching or the fact that the dye may alter the cells behavior.

The annotations for these sequences are generated from the fluorescence microscopy images, in which the cells nuclei are labeled with a fluorescent dye and can be tracked with high spatial accuracy. These fluorescence-based annotations serve two purposes: First, the approach may be validated in the presence of settings that are otherwise difficult to annotate, e.g. in the presence of dense clusters or when there are simply too many cells in the field of view. Second, they allow to measure to which degree the method is able to reconstruct the same lineages as from traditional fluorescent microscopy, yet using LFM only (i.e. without any fluorescence labeling).

**Network architecture.** The network architecture is essentially as described above with reference to Example 2. In detail, the inventors used dropout of 0.5 after the last convolutional layer to avoid overfitting. An alternative is the smaller variant called Resnet-11 , where the inventors already truncate the original Resnet-50 at layer 11 before appending the above described final layers. As an alternative to the residual networks, the inventors adjust the UNet [15] architecture for the purpose. A UNet with 5 levels is used, i.e. 5 pooling operations in the contracting and 5 up-sampling operations in the expanding path. To this end, the stacks are replaced in the expansive path with single up- convolution layers and concatenated with the corresponding feature maps of the contracting path. Each of these up-convolution layers upsamples by a factor 2 and has kernels of $5 \times 5 \times k$ , where k is the number of feature channels according to the level. The last upsampling-layer finally ends with a sigmoid activation to rescale activation into the interval of [0, 1]. With about $40.5 \times 10^6$ parameters, this architecture is considerably larger than the Resnet-23 that has about $1.75 \times 10^6$.

**Loss function & training setup.** The general training procedure for the cell detectors is essentially similar to the one described above with reference to Example 2. More details are given in the following. The inventors sample n new (sub-)images from the training corpus in each epoch. The size of these training images depends on the detectors architecture and are large enough to contain several cells. For example, all Resnet-derived detectors such as Resnet-11 and Resnet-23 take inputs of size $224 \times 224$. Each image is normalized to zero mean and unit variance. The sampling procedure chooses uniformly amongst the available datasets and, then, amongst its frames. While this means that frames of shorter sequences are more frequently sampled than those of longer sequences, it helps keeping the balance between sequences of different cell types and cell culture density. For each training image $I_k$ , the inventors construct a corresponding cell probability map $P ( c_s = 1 | I_k )$ by placing a Gaussian kernel $G^\sigma$ at each annotated centre. The size of the Gaussian kernel, controlled by $\sigma$, has to be chosen accordingly such that it gives appropriate spatial support but does not overlap too strongly within cell clusters. The fact that a single $\sigma$ is used implicitly represents the assumption that all cells take approximately the same spatial extent, which is reasonable for the microscopy data. In the examples, the inventors work with $\sigma = 8$ and $\sigma = 4$ .

The inventors train the detector network to approximate these probability maps $P ( c_s = 1 | I_t )$ by minimizing a pixel-wise mean absolute error (MAE) loss. The inventors found that the MAE yields better results than using cross entropy, since MAE does not pull the output probabilities towards extreme probabilities as the cross entropy loss does.

This helps in particular in the presence of sequences with dense cell cultures. Furthermore, the inventors mask the loss to be insensitive to the border region (15 px from the images edge) in order to not penalize the detector for its behaviour under incomplete information, i.e. where some of the convolutional layers operate on zero-padded regions. This boundary region is also accounted for when applying the detector to larger images than its native image size: patches to process are chosen with an overlap of at least twice the border region. Since the MAE is a surrogate for the actual metric of interest, the detection rate, it can be difficult to judge progress of training just based on this MAE pixel-wise loss. The inventors handle this as follows: In the beginning of training, the inventors randomly select a small number of (entire) frames from each training sequence as validation frames. Then, at the end of each epoch, the inventors calculate the actual detection precision, recall and F1-score by taking the local maxima on the current probability map for these validation frames as cell detections and matching them to the annotations. The inventors found it sufficient to only calculate a greedy matching between detections and annotations instead of an optimal one, saving valuable time. Keeping in mind that this estimate is slightly optimistic due to the potentially high correlation between the validation frames and other training frames that are within close temporal proximity, the inventors found it a valuable approach for monitoring training progress in practice.

**Metrics.** Annotated cells (vertices in the ground truth graph) are matched to detections (vertices in the estimated graph) within each frame such that each vertex is matched to at most one vertex in the other graph. Only matches closer than 10px ($\approx$ a cell center region) are considered as a true positive (TP). All unmatched annotations are counted as false negative (FN), unmatched detections as false positive (FP). The matching can be computed efficiently with the Hungarian algorithm. Using these definitions, precision, recall and F1-score are calculated. These three metrics provide information on the detection accuracy and can be calculated for each frame individually.

To compare the quality of different lineages, the same vertexmatching between the annotated cell lineage forest and the predicted cell lineage forest is used again to calculate the number of TP, FP and FN as described for the detection metrics. Then, the number of false links is determined, i.e. how often two matched nodes do not have the same parent. From these, multiple object detection accuracy (MODA) and multiple object tracking accuracy (MOTA) [2] are calculated, two metrics commonly used in multi-object tracking tasks. Furthermore, the number of edit operations needed to get from the predicted lineage to the ground truth lineage is computed, and the tracking accuracy (TRA) score is calculated as proposed in [12] for cell tracking from it. This metric uses a normalized count of necessary edits to judge the quality of a lineage, that is $\mathrm{TRA} = 1 - \frac{|\Delta(G_{\mathrm{Pred}}, G_{\mathrm{GT}})|}{|\Delta(0, G_{\mathrm{GT}})|}$, where $\Delta(G,H)$ is the set of edits required to get from $G$ to $H$, and $\Delta(0,G)$ are the operations needed to build $G$ from scratch. Other than in the original definition of TRA, a unit weight is set for each type of edit (addition or deletion of a node or edge). This is justified by the fact that the method works with point annotations for cells instead of segmentations, rendering both addition and deletion equally expensive to correct.

## Example 4 - Original Datasets

The subsequent experiments are conducted on the manually annotated dataset used in Example 3. It consists of three individual sequences: one sequence of A549 cells, annotated over 250 frames in a region of interest (ROI) of $1295 \times 971$px, used for all training purposes, as well as two sequences of 3T3 cells for testing.

These two testing sequences are annotated over 350 and 300 frames in a ROI of $639 \times 511$px (*3T3-I*) and $1051 \times 801$px (*3T3-II*), respectively. The reason for this training/test split is to avoid an overestimation of the methods performance through a potential overfit. Frames were acquired at an interval of 3min with a spacing of $1.4\mu$m $\times$ $1.4\mu$m per pixel.

**Benchmarking Detectors.** The example compares the discussed network configurations, including the described Resnet-23, Resnet-11 and the UNet, plus a plain vanilla CNN with three $5 \times 5$ convolutional layers followed by max pooling and finally, one up-convolutional layer of $8 \times 8 \times 1$ to compensate for the down-sampling operations, denoted as CNN-4. The inventors train the networks for 100 epochs, in each of which 4000 training images are sampled in batches of 8 from the training sequence. The inventors employ Adam >D. Kingma, J. Ba, Adam: A method for stochastic optimization, in: ICLR, 740 2015, pp. 1-13) as optimization strategy. For the two Resnet-derived architectures, the inventors use pre-trained weights from Resnet-50 [5], which is fine tuned with a learning rate of learning rate of $10^{-3}$. For UNet and CNN-4, the inventors adjust the learning rate to $10^{-2}$, but otherwise, keep the same training schedule.

The results of this experiment in terms of detection metrics on the two test sequences are similar to Example 3 (**Fig. 5**). The inventors find that the Resnet-23 obtains the best average F1-score of 94.1%, followed by the UNet with 89.2%, Resnet-11 with 85.1% and finally, the CNN-4 with 72.2%. The major source of mistakes on these two test sequences occur in the form of spurious detections, deteriorating the precision of the detectors. The CNN-4 is particularly prone to such mistakes, achieving a considerably lower precision than its competitors.

**Example 5 - Fluorescence-annotated Sequences**

Example 5 is conducted on a new dataset of sequences for which fluorescence microscopy images were acquired concurrently to the LFM images. Thanks to this, the inventors are able to generate cell lineage annotations not only from visual appearance of the LFM, but based on the fluorescence microscopy, where Fluorescence LFM cell nuclei were labeled with a fluorescent dye. This allows to generate a large corpus of validation sequences with annotations even in dense cell clusters that would otherwise be ambiguous to annotate or with several hundreds per frame simply too many. From these fluorescence-based annotations, the inventors quantify how far the method is able to retrieve the same information from only LFM videos. This is interesting because LFM is a label-free technique and thus avoids all the limitations inherent to fluorescence labeling, such as limited temporal observation due to bleaching or the fact that the dye may alter the cells behavior. The inventors acknowledge that the fluorescent labeling may not succeed for a small fraction of cells, as a few of them do not incorporate the fluorescent dye sufficiently, and are thus not visible in the fluorescence image. However, the inventors consider this fraction to be negligible for the present study. The dataset includes 16 sequences in total of three different cell lines, A549, 3T3 and HuH7 cells, and a wide variety of settings, which are mainly categorized with respect to the sequences cell culture density (from low over medium to high density). Examples are illustrated in **Fig. 7**. Because of the concurrent fluorescence microscopy setup, the acquisition interval is larger than for those sequences in Sec. 4.2, ranging from 14.95min to 28.75min. The videos are between 82 and 279 frames. All of them have a ROI of $847 \times 1007$px and a pixel spacing of $1.65\mu$m $\times$ $1.65\mu$m. The annotations in the fluorescence microscropy videos are generated using TrackMate (J.-Y. Tinevez, N. Perry, J. Schindelin, G. M. Hoopes, G. D. Reynolds, E. Laplantine, S. Y. Bednarek, S. L. Shorte, K. W. Eliceiri, Trackmate: An open and extensible platform for single-particle tracking, Methods 115 (2017) 80-90) with manually tweaked parameters for each sequence. Fluorescence and LFM images are registered with an affine transform estimated from several manually selected key point pairs. This dataset may be referred to as *fluorescence-annotated* in the remainder of the disclosure.

**Detection Performance and Retraining.** The inventors have evaluated the best-performing models, the Resnet-23 and UNet architecture, on the fluorescence-annotated dataset. The inventors apply the two detectors trained on the original dataset of Sec. 4.2.1, to the new dataset. Then, the inventors retrain both models on the fluorescence-annotated sequences in two variations. In the first, the inventors only train on sequences of low and medium cell density. In the second, the inventors also use dense sequences. In both cases, the inventors employ a 3-fold cross-validation and report only scores on the hold-out sequences of the according split. Again, the inventors treat each individual sequence as one entity in order to avoid over-optimistic performance estimates. The inventors stratify the folds to ensure that all training sets contain sequences of each cell line and density. The models are retrained for 100 epochs of 4000 sampled images at a learning rate of $10^{-4}$ with Adam (cf. above) as optimization strategy. The batch size is set to 50 and 25 for Resnet-23 and UNet, respectively, and the size of the placed Gaussians is reduced to $\sigma = 4$ in order to account for dense cell clusters that require finer grained kernels.

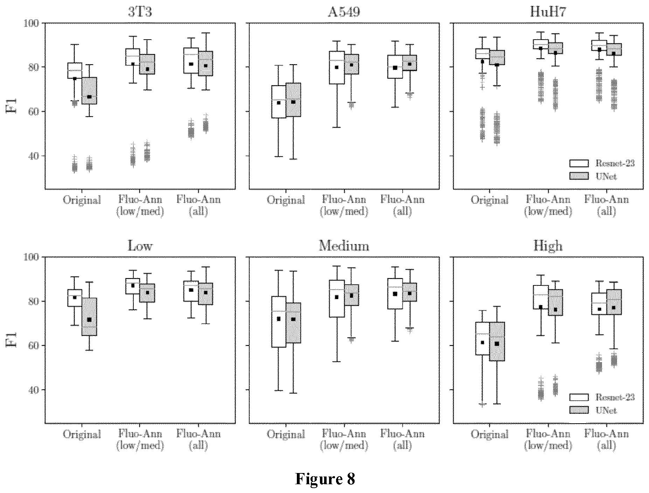

The comparison is presented in **Fig. 8. Fig. 8** shows a performance comparison of Resnet-23 and UNet on the fluorescence-annotated dataset. Original refers to the detectors trained on the original dataset of Example 2, while Fluo-Ann are the detectors that were retrained on fluorescence-annotated sequences (Example 5). We distinguish between retraining with all sequences (all) and retraining only on sequences that were considered having a low or medium cell density (low/med). F1-scores are shown in % and are calculated per-frame on the respective hold-out set of a 3-fold crossvalidation. The top row shows performance with respect to the observed cell lines, i.e. 3T3, A549 and HuH7 cells, while the bottom row categorizes them according to their cell culture density. Median values are indicated with an orange line, mean values with a black square. Outliers are depicted as grey +. Retraining improves performance in all categorizations, yet the inventors find the fluorescence-based annotations considerably more challenging to reproduce than the original ones that were created from LFM only.

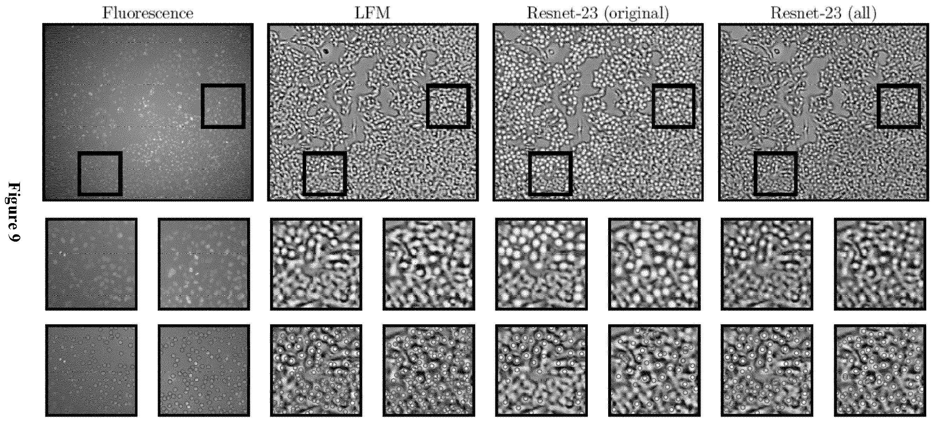

The inventors observe that the detectors trained on the original datasets perform best on sequences of low cell culture density, which are most similar to the original ones, and exhibit decreasing performance with increasing density. This is also seen in the performance conditioned on the cell line. A549 cells, which tend to agglomerate and build dense clusters, are more difficult to detect than the other two cell lines, which spread more evenly. Overall, the performance decreases compared to the benchmark on manual annotations of Example 3. To a certain degree, this is to be accounted to the more diverse dataset, but the main difficulty comes from the fact that some of the cells that are well-visible in the fluorescence microscope are hard to spot in the corresponding LFM image, even for a human annotator (cf. **Fig. 7**, in particular the medium and high density example, or the visual comparison in **Fig. 9**). The *original* detectors are thus simply trained to another standard.

Retraining the detectors on fluorescence-based annotations helps. On low density sequences, F1-scores improve from a mean of 81.4% to 87.0% (Resnet23) and from 71.6% to 83.9% (UNet), indicating that the more challenging fluorescence-based annotations can be learned to a certain degree. Similar findings are made on medium density sequences, with the only difference being that both architectures benefit by about the same amount: Resnet-23 improves from 71.9% to 83.3% and UNet from 71.9% to 83.4%. The improvements on high density sequences are the largest.

Both original detectors obtain a mean F1score of 61.2% (Resnet-23) and 60.7% (UNet), while the retrained ones obtain 76.2% and 77.2%, respectively. An interesting observation is that including dense sequences into the training set does not considerably improve the average when compared to retraining only with low/medium density sequences (c.f. **Fig. 8**, *all* vs *low/mid).* A partial reason could be that medium sequences contain sequences with clusters of similar appearance like completely dense sequences, thereby providing information at training time that transfers to the high density setting. On the other hand, the inventors observe that prediction on the worst frames ameliorate when training on all (cf. outliers in **Fig. 8**: High) while the median decreases. This could be considered an indicator that the models have insufficient capacity to capture all the necessary appearances, or that some of the relevant information is simply not present in the LFM image and the models try to compensate for it by shifting their expectation. A qualitative example of the detection probability maps with and without retraining can be found in **Fig. 9**.

**Fig. 9** shows a qualitative comparison on a sequence with a dense cell culture. From left to right: Fluorescence microscopy image, raw LFM image, LFM image with heatmap as overlay from a Resnet-23 trained on the original dataset (original) and retrained on fluorescence-based annotations (all). Detail views corresponding to the drawn rectangles are presented in the two lower rows. Red circles in the bottom row represent cells, either from fluorescence-based annotations (Fluorescence and LFM columns) or generated from the detectors probability map. For the latter two, green edges connect detections that were clustered together in the solution of the MLTP. The inventors notice that the original Resnet-23 struggles with the varying sharpness in dense regions. The retrained Resnet-23 handles this better and is able to distinguish close cells, partly due to the finer heatmap kernels. The inventors further observe that determining the presence of certain cells only based on the LFM is extremely challenging, e.g. in the bottom right corner of the right detail.

In general, the inventors notice that the considerably extended training dataset especially benefits the 485 model with more capacity, that is the UNet, which is found to be on par with the Resnet-23 after retraining.

**Lineage Tracing.** Next the tracing performance of the MLTP combined with either of the two retrained detectors of the previous section on the fluorescence-annotated sequences is evaluated. Retraining is again done in a 3-fold crossvalidation using sequences of all densities (i.e. the ones denoted as Fluo-Ann. (all) in **Fig. 8**). Otherwise, the inventors keep the MLTP parameters fixed as in Example 4. All scores are calculated on the according hold-out sets of the detectors crossvalidation.

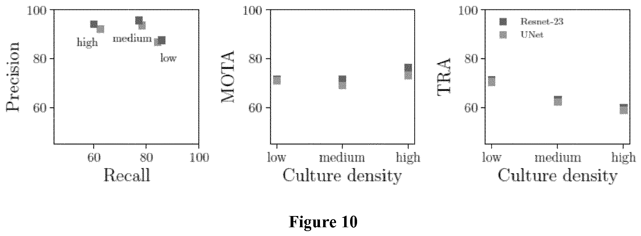

The results are presented in **Fig. 10** and **Table 2.** Fig. 10 shows a comparison of lineage tracing metrics on the fluorescence-annotated dataset. The inventors compare the MLTP together with Resnet-23 and Unet, both being retrained on fluoresence-annotated sequences of all densities. All scores are calculated on hold-out sets of a 3-fold crossvalidation. The left plot shows mean precision and recall, while the middle and right show mean tracking metrics MOTA and TRA. Low, medium and high refer to the cell culture density of the analyzed sequences. Average MOTA over all sequences is 73.1% and 70.78% for Resnet-23 and UNet, respectively, while average TRA is 64.2% and 63.2%. The inventors observe that TRA decreases with increasing density, while MOTA shows a slight improvement. This is due to the fact that performance on dense sequences suffers from a higher amount of false negatives, i.e. a lower recall. TRA penalizes these false negatives twice (through both a vertex and an edge insertion), while MOTA only counts each of them once. MOTA puts more weight on the tracking accuracy of detected nodes, which becomes slightly easier in dense sequences due to the constrained spatial motion.

**Table 2** shows average performance metrics obtained on the fluorescence-annotated dataset. MLTP is the method based on moral lineage tracing, while DTP solves a disjoint trees problem. All metrics are shown in %. Averages are computed over all sequences with unit weight and reported in the last row.

**Table 2**

| Detector | Model | Precision | Recall | FI | MODA | MOTA | TRA |
|---|---|---|---|---|---|---|---|
| Resnet-23 | DTP | 87.27 | 77.30 | 80.76 | 88.27 | 63.87 | 60.46 |
| | MLTP | 93.09 | 73.92 | 81.14 | 94.21 | 73.11 | 64.26 |
| UNet | DTP | 82.70 | 79.32 | 80.12 | 83.27 | 56.64 | 57.34 |
| | MLTP | 91.40 | 74.85 | 81.21 | 92.66 | 70.78 | 63.25 |

Average MOTA over all sequences is 73.1% and 70.78% for Resnet-23 and UNet, respectively, while average TRA is 64.2% and 63.2%. In both cases, the MLTP obtains better F1, MOTA and TRA scores than the alternative model of solving a disjoint trees problem (denoted with DTP). Analyzing the results with respect to cell culture density in the sequence, the inventors observe that TRA decreases with higher cell culture density from 71.3% to 59.9%, whereas MOTA increases slightly from 71.6% to 76.2%. The same trend is observed in combination with the UNet with a TRA decrease from 70.45% to 58.9% and a minor MOTA increase from 70.9% to 73.2%. This is due to the fact that performance on dense sequences suffers from a higher amount of false negatives, i.e. a lower recall. TRA penalizes false negatives twice (through both a vertex and an edge insertion), while MOTA only counts them once (as missed detection). MOTA puts more weight on the tracking accuracy of detected nodes, which becomes easier in dense sequences due to the constrained spatial motion, thus explaining the slight improvement.

Both MOTA and TRA are lower than in the evaluation on manually annotated datasets of Sec. 4.2.2, mainly because there is no mechanism to compensate for entirely missed tracklets, which would be visible in the fluorescence sequence but are hard to retrieve only from only the LFM sequence and thus, are the major source of error on the fluorescence-annotated dataset.

**Assessing Cell Population Dynamics.** These examples show experimentally that the presently disclosed method is able to determine cell lineage forests of high quality. Furthermore, the inventors examined its performance on the more challenging problem of reconstructing cell lineages from LFM equivalent to the ones obtainable from a corresponding fluorescence microscopy sequence. To this end, present experiments are presented on an extended dataset for which fluorescence microscopy was acquired in parallel to LFM and ground truth lineages were generated from the former. While the framework is able to adapt to these annotations through retraining, reaching an average MOTA of up to 73.1%, it does not reach the same level of performance observed on manually annotated datasets based on LFM images only. Future work will need to investigate up to which point this performance can be pushed and to which degree the information on certain cell locations can no longer be retrieved from LFM images. While our method may in some instances be automated, certain challenging acquisition environments might require human interaction, e.g. for re-training the detectors. To this end, future research on integrating it into an interactive workflow would be valuable and could use, for example, active learning techniques.

## References

1. Arbelle, A., et al.: Analysis of high-throughput microscopy videos: Catching up with cell dynamics. In: MICCAI. pp. 218-225. (2015)

2. Bernardin, K., Stiefelhagen, R.: Evaluating multiple object tracking performance: the clear mot metrics. EURASIP JIVP(1), 1-10 (2008)

3. Flaccavento, G., et al.: Learning to count cells: applications to lens-free imaging of large fields. Microscopic Image Analysis with Applications in Biology (2011)

4. Greenbaum, A., et al.: Imaging without lenses: achievements and remaining challenges of wide-field on-chip microscopy. Nature methods 9(9), 889-895 (2012)

5. He, K., et al.: Deep residual learning for image recognition. In: CVPR. pp. 770-778 (2016)

6. Jaqaman, K., et al.: Robust single-particle tracking in live-cell time-lapse sequences. Nature methods 5(8), 695-702 (2008)

7. Jug, F., et al.: Moral lineage tracing. In: CVPR pp. 5926-5935 (2016)

8. Kainz, P., et al.: You should use regression to detect cells. In: MICCAI. pp. 276-283 (2015)

9. Kesavan, S.V., et al.: High-throughput monitoring of major cell functions by means of lensfree video microscopy. Scientific reports 4, 5942 (2014)

10. Khan, A., et al.: Deep convolutional neural networks for human embryonic cell counting. In: ECCV. pp. 339-348. (2016)

11. Magnusson, K.E.G., Jaldén, J.: A batch algorithm using iterative application of the viterbi algorithm to track cells and construct cell lineages. In: ISBI. (2012)

12. Maska, M., et al.: A benchmark for comparison of cell tracking algorithms. Bioinformatics 30(11), 1609-1617 (2014)

13. Mudanyali, O., et al.: Compact, light-weight and cost-effective microscope based on lensless incoherent holography for telemedicine applications. Lab on a Chip 10(11), 1417-1428 (2010)

14. Rempfler, M., et al.: Efficient algorithms for moral lineage tracing. In: ICCV 2017 (in press), preprint at http://arxiv.org/abs/1702.04111 (2017)

15. Ronneberger, O., et al.: U-net: Convolutional networks for biomedical image segmentation. In: MICCAI. pp. 234-241. (2015)

16. Xie, W., et al.: Microscopy cell counting with fully convolutional regression networks. In: MICCAI 1st WDLMIA (2015)

## Claims

1. A computer-implemented method for detecting biological cells comprising

- Obtaining multiple lens-free microscopy images, depicting the biological cells;
- Training a convolutional neural network, using annotated training data, wherein the annotated training data comprise fluorescence images and/or videos of biological cells; and
- Generating a probability map by regression of the trained convolutional neural network for one of the lens-free microscopy images, the probability map indicating probabilities for the presence of the biological cells at multiple regions, in particular pixels, of the one lens-free microscopy image; and
- determining a cell lineage forest indicating at least the localisation of some of the biological cells over the sequence of the multiple lens-free microscopy images, based on the generated probability maps, one for each of the multiple lens-free microscopy images.

2. Method according to claim 1,
the cell lineage forest further indicating the descent of said some of the biological cells over the sequence of the multiple lens-free microscopy images, based on the generated probability maps, one for each of the multiple lens-free microscopy images.

3. Method according to claim 2, wherein the determining is performed by global optimization.

4. Method according to the preceding claim, wherein the optimization is carried out on a hypothesis graph using a probabilistic model.

5. Method according to the preceding claim, wherein the hypothesis graph is constructed based on the generated probability maps.

6. Method according to one of the preceding claims, wherein the biological cells comprise cancer cells, in particular A549 cells or skin cancer cells, or wherein the biological cells comprise 3T3 cells.

7. Computer program product including program code configured to, when executed in a computing device, to carry out the steps of one of the preceding claims.

8. System to detect biological cells and/or trace a cell lineage forest of biological cells, comprising

- a microscopy sensor, in particular a CMOS sensor for lens-free microscopy, and
- a processing part, the processing part configured to carry out the steps of one of claims 1 to 6.

**Patentansprüche**

1. Computer-implementiertes Verfahren zum Erkennen biologischer Zellen, umfassend:

- Erhalten mehrerer linsenfreier Mikroskopiebilder, die die biologischen Zellen abbilden;
- Trainieren eines Faltungsneuronalnetzes (engl. convolutional neural network) unter Verwendung von annotierten Trainingsdaten, wobei die annotierten Trainingsdaten Fluoreszenzbilder und/oder -videos von biologischen Zellen umfassen; und
- Erzeugen einer Wahrscheinlichkeitskarte durch Regression des trainierten Faltungsneuronalnetzes für eines der linsenfreien Mikroskopiebilder, wobei die Wahrscheinlichkeitskarte Wahrscheinlichkeiten für das Vorhandensein der biologischen Zellen in mehreren Regionen, insbesondere Pixeln, des einen linsenfreien Mikroskopiebildes angibt; und
- Bestimmen eines Zellabstammungswalds, der zumindest die Lokalisierung einiger der biologischen Zellen über die Sequenz der mehreren linsenfreien Mikroskopiebilder anzeigt, basierend auf den erzeugten Wahrscheinlichkeitskarten, eine für jedes der mehreren linsenfreien Mikroskopiebilder.

2. Verfahren nach Anspruch 1,
der Zellabstammungswald ferner die Abstammung einiger der biologischen Zellen über die Sequenz der mehreren linsenfreien Mikroskopiebilder anzeigt, basierend auf den erzeugten Wahrscheinlichkeitskarten, eine für jedes der mehreren linsenfreien Mikroskopiebilder.

3. Verfahren nach Anspruch 2, wobei die Bestimmung durch globale Optimierung erfolgt.

**4.** Verfahren nach dem vorhergehenden Anspruch, wobei die Optimierung auf einem Hypothesengraphen unter Verwendung eines probabilistischen Modells durchgeführt wird.

**5.** Verfahren nach dem vorhergehenden Anspruch, wobei der Hypothesengraph auf der Grundlage der erzeugten Wahrscheinlichkeitskarten konstruiert wird.

**6.** Verfahren nach einem der vorhergehenden Ansprüche, wobei die biologischen Zellen Krebszellen, insbesondere A549-Zellen oder Hautkrebszellen umfassen, oder wobei die biologischen Zellen 3T3-Zellen umfassen.

**7.** Computerprogrammprodukt, das Programmcode enthält, der dazu konfiguriert ist, bei Ausführung in einer Rechnervorrichtung, die Schritte eines der vorhergehenden Ansprüche auszuführen.

**8.** System zum Erkennen von biologischen Zellen und/oder zur Verfolgung eines Zellabstammungswalds von biologischen Zellen, umfassend

- einen Mikroskopiesensor, insbesondere einen CMOS-Sensor für linsenlose Mikroskopie, und
- einen Verarbeitungsteil, wobei das Verarbeitungsteil dazu konfiguriert ist, die Schritte nach einem der Ansprüche 1 bis 6 auszuführen.

## Revendications

**1.** Méthode informatisée de détection de cellules biologiques comprenant

- Obtention de plusieurs images de microscopie sans lentille, représentant les cellules biologiques ;
- Entraînement d'un réseau neuronal convolutif à l'aide de données d'entraînement annotées, dans lequel les données d'entraînement annotées comprennent des images et/ou des vidéos de fluorescence de cellules biologiques ; et
- Génération d'une carte de probabilité par régression du réseau neuronal convolutif entraîné pour une des images de microscopie sans lentille, la carte de probabilité indiquant les probabilités de présence des cellules biologiques dans plusieurs régions, en particulier des pixels, de l'image de microscopie sans lentille ; et
- Détermination d'une forêt de lignées cellulaires indiquant au moins la localisation de certaines des cellules biologiques sur la séquence des multiples images de microscopie sans lentille, sur la base des cartes de probabilité générées, une pour chacune des multiples images de microscopie sans lentille.

**2.** Méthode selon la revendication 1, dans laquelle
la forêt de lignées cellulaires indique en outre la descendance de ladite partie des cellules biologiques au cours de la séquence des multiples images de microscopie sans lentille, sur la base des cartes de probabilité générées, une pour chacune des multiples images de microscopie sans lentille.

**3.** Méthode selon la revendication 2, dans laquelle la détermination est effectuée par optimisation globale.

**4.** Méthode selon la revendication précédente, dans lequel l'optimisation est effectuée sur un graphe d'hypothèses à l'aide d'un modèle probabiliste.

**5.** Méthode selon la revendication précédente, dans laquelle le graphe d'hypothèses est construit sur la base des cartes de probabilité générées.

**6.** Méthode selon l'une des revendications précédentes, dans laquelle les cellules biologiques comprennent des cellules cancéreuses, en particulier des cellules A549 ou des cellules de cancer de la peau, ou dans laquelle les cellules biologiques comprennent des cellules 3T3.

**7.** Produit de programme informatique comprenant un code de programme configuré pour, lorsqu'il est exécuté dans un dispositif informatique, réaliser les étapes de l'une des revendications précédentes.

**8.** Système de détection de cellules biologiques et/ou de traçage d'une forêt de lignées cellulaires de cellules biologiques, comprenant

- un capteur de microscopie, en particulier un capteur CMOS pour la microscopie sans lentille, et
- une partie de traitement, la partie de traitement étant configurée pour exécuter les étapes de l'une des revendications 1 à 6.

Figure 1

Figure 2

(A) (B) (C) (D) (E)

**Figure 3**

**Figure 4**

**Figure 5**

Figure 6

**Figure 7**

**Figure 8**

Figure 9

**Figure 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. KINGMA ; J. BA, ADAM.** A method for stochastic optimization. *ICLR,* 2015, vol. 740, 1-13
- **J.-Y. TINEVEZ ; N. PERRY ; J. SCHINDELIN ; G. M. HOOPES ; G. D. REYNOLDS ; E. LAPLANTINE ; S. Y. BEDNAREK ; S. L. SHORTE ; K. W. ELICEIRI, TRACKMATE.** An open and extensible platform for single-particle tracking. *Methods,* 2017, vol. 115, 80-90
- **ARBELLE, A. et al.** Analysis of high-throughput microscopy videos: Catching up with cell dynamics. *MICCAI,* 2015, 218-225
- **BERNARDIN, K. ; STIEFELHAGEN, R.** Evaluating multiple object tracking performance: the clear mot metrics. *EURASIP JIVP(1),* 2008, 1-10
- **FLACCAVENTO, G. et al.** Learning to count cells: applications to lens-free imaging of large fields. *Microscopic Image Analysis with Applications in Biology,* 2011
- **GREENBAUM, A. et al.** Imaging without lenses: achievements and remaining challenges of wide-field on-chip microscopy. *Nature methods,* 2012, vol. 9 (9), 889-895
- **HE, K. et al.** Deep residual learning for image recognition. *CVPR.,* 2016, 770-778
- **JAQAMAN, K. et al.** Robust single-particle tracking in live-cell time-lapse sequences. *Nature methods,* 2008, vol. 5 (8), 695-702
- **JUG, F. et al.** Moral lineage tracing. *CVPR,* 2016, 5926-5935
- **KAINZ, P. et al.** You should use regression to detect cells. *MICCAI.,* 2015, 276-283
- **KESAVAN, S.V. et al.** High-throughput monitoring of major cell functions by means of lensfree video microscopy. *Scientific reports,* 2014, vol. 4, 5942
- **KHAN, A. et al.** Deep convolutional neural networks for human embryonic cell counting. *ECCV,* 2016, 339-348
- **MAGNUSSON, K.E.G. ; JALDÉN, J.** A batch algorithm using iterative application of the viterbi algorithm to track cells and construct cell lineages. *ISBI,* 2012
- **MASKA, M. et al.** A benchmark for comparison of cell tracking algorithms. *Bioinformatics,* 2014, vol. 30 (11), 1609-1617
- **MUDANYALI, O. et al.** Compact, light-weight and cost-effective microscope based on lensless incoherent holography for telemedicine applications. *Lab on a Chip,* 2010, vol. 10 (11), 1417-1428
- **REMPFLER, M. et al.** Efficient algorithms for moral lineage tracing. *ICCV 2017,* 2017, http://arxiv.org/abs/1702.04111
- **RONNEBERGER, O. et al.** U-net: Convolutional networks for biomedical image segmentation. *MICCAI,* 2015, 234-241
- **XIE, W. et al.** Microscopy cell counting with fully convolutional regression networks. *MICCAI 1st WDL-MIA,* 2015